# EUROPÄISCHE PATENTSCHRIFT

(11) **EP 0 681 691 B1**
(45) Veröffentlichungstag und Bekanntmachung des Hinweises auf die Patenterteilung: **31.07.1996**
(21) Anmeldenummer: 93902038.4
(22) Anmeldetag: 19.01.1993
(51) Int. Cl.: G01L 9/00, G01L 9/12, G01L 15/00

(54) **DRUCKSENSOR**
PRESSURE SENSOR
CAPTEUR DE PRESSION

(43) Veröffentlichungstag der Anmeldung: 15.11.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: MOKWA, Wilfried, D-4150 Krefeld (DE); KANDLER, Michael, D-5042 Erfstadt (DE); AMELUNG, Jörg, D-4150 Krefeld (DE)
(74) Vertreter: Schoppe, Fritz, Dipl.-Ing.
(86) Internationale Anmeldenummer: DE9300048
(87) Internationale Veröffentlichungsnummer: WO9417383

(56) Entgegenhaltungen:
- EP-A- 0 339 981
- EP-A- 0 500 234
- US-A- 3 930 412
- US-A- 4 790 192

## Beschreibung

Allgemein befaßt sich die Erfindung mit dem Gebiet der Drucksensoren. Insbesondere befaßt sich die Erfindung mit einem Relativdrucksensor, der als eine mikromechanische Struktur mit kleinsten Dimensionen implementiert werden kann. Mit anderen Worten bezieht sich die Erfindung auf einen Drucksensor mit einem Substrat und einer mit diesem Substrat einen Hohlraum festlegenden Schicht, die oberhalb des Hohlraumes ein Membran-artiges Gebiet aufweist, das von einem außerhalb des Hohlraumes herrschenden ersten Druck beaufschlagbar ist, gemäß dem Oberbegriff des Patentanspruchs 1.

Mit Methoden der Mikromechanik und insbesondere der Oberflächenmikromechanik implementierbare Drucksensoren sind in verschiedensten Ausgestaltungen in der jüngeren wissenschaftlichen Literatur und in der jüngeren Patentliteratur geoffenbart worden.

So zeigt beispielsweise die internationale Patentanmeldung PCT/DE91/00107 (Veröffentlichungs-Nummer WO91/12507) der Anmelderin einen Absolutdrucksensor, der mit Methoden der Mikromechanik aus einem Halbleiterwerkstoff, wie insbesondere Silizium, hergestellt werden kann und der ein Substrat aufweist, in dem durch eine entsprechende Dotierung ein leitfähiger Halbleiterbereich gegenüber dem Substrat isoliert angeordnet ist, wobei eine Drucksensorstruktur dadurch auf diesem leitfähigen Halbleiterbereich in dem Halbleitersubstrat aufgebaut wird, daß zunächst eine Abstandshalterschicht auf das Substrat aufgebracht wird, sodann eine polykristalline Halbleiterschicht auf der Abstandshalterschicht abgeschieden wird, woraufhin die polykristalline Halbleiterschicht dotiert wird und die Abstandshalterschicht, die auch als Opferschicht bezeichnet werden kann, durch Ätzen über geeignete Kanäle entfernt wird. Abschließend werden die Kanäle durch Abscheiden eines geeigneten Materiales verschlossen. Es ergibt sich eine kapazitive Drucksensorstruktur, bei der die polykristalline Halbleiterschicht zusammen mit dem Substrat einen abgeschlossenen Hohlraum festlegt, der beispielsweise evakuiert sein kann oder mit einem Gas mit einem vorbestimmten Druck gefüllt sein kann. Ein derartiger Drucksensor ist zwar dahingehend ausgesprochen vorteilhaft, daß er die Erfassung eines Absolutdruckes mit hoher Meßgenauigkeit ermöglicht und aufgrund der Isolation des Halbleiterbereiches gegenüber dem Substrat kompatibel für CMOS-Schaltungen gestaltet ist, jedoch ergibt sich eine Einschränkung dieses Drucksensors dahingehend, daß er nur für die Erfassung eines Absolutdruckes geeignet ist.

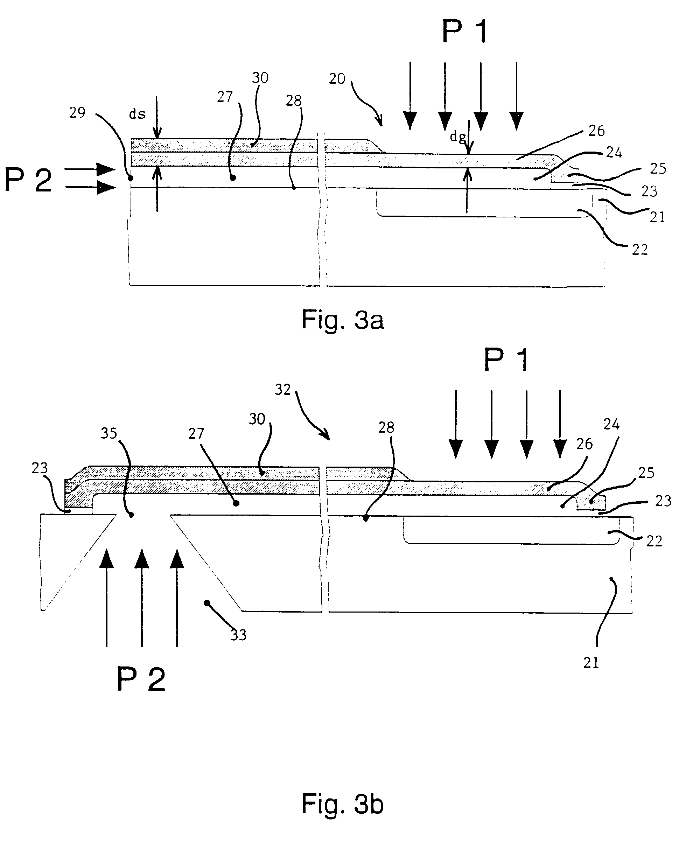

Es sind bereits Relativdrucksensoren bzw. Drucksensoren für die Differentialdruckmessung bekannt, die mit mikromechanischen Technologien realisiert worden sind. So zeigt beispielsweise die Fachveröffentlichung Journal of Vacuum Science & Technology/A, Band 4, Nr. 3, Mai bis Juni 1986, Teil 1, Seite 618, Spalte 2, letzter Absatz bis 619, Spalte 1, erster Absatz in Verbindung mit Fig. 3 einen aus Halbleitermaterialien aufgebauten Relativdrucksensor mit einem Substrat und einer zusammen mit dem Substrat einen Hohlraum festlegenden Polysiliziumschicht, wobei das Substrat eine Rückseitenöffnung aufweist, die durch anisotropes Ätzen ausgehend von der Rückseite des Substrates bis zu dem Hohlraum gebildet ist. Durch diese Rückseitenöffnung wird bei der Herstellung des Drucksensors eine Abstandshalterschicht bzw. Opferschicht zur Festlegung des späteren Drucksensorhohlraumes mittels Flußsäure herausgeätzt. Es hat sich gezeigt, daß derartige Relativdrucksensoren nur eine unzureichende mechanische Stabilität insbesondere im Überlastfall haben. Ferner hat sich erwiesen, daß derartige Relativdrucksensoren Streuungen bezüglich ihrer Erfassungsempfindlichkeit, also beispielsweise im Falle eines kapazitiven Relativdrucksensors Streuungen hinsichtlich des Quotientens der Kapazitätsänderung bezogen auf die Druckänderung auch innerhalb einer einzigen Fertigungscharge haben.

Ausgehend von dem oben beschriebenen Stand der Technik liegt der Erfindung daher die Aufgabe zugrunde, einen Drucksensor zu schaffen, mit dem eine Druckdifferenz gemessen werden kann und der bei guter Reproduzierbarkeit der Erfassungsempfindlichkeit innerhalb einer Herstellungscharge von Drucksensoren eine weitgehende Mikrominiaturisierung erlaubt.

Diese Aufgabe wird durch einen Drucksensor gemäß Patentanspruch 1 gelöst.

Im Gegensatz zum Stand der Technik, der eine direkte Erschließung des Hohlraumes des Drucksensors über eine Rückseitenöffnung des Substrates zeigt, lehrt die Erfindung, den Innendruck für den Drucksensorhohlraum über einen sich entlang der Oberfläche des Substrates erstreckenden Kanal zuzuführen. Ferner ist erfindungsgemäß vorgesehen, daß dieser Kanal gegenüber dem Substrat von einer Schichtstruktur festgelegt wird, welche zumindest die erste Schicht umfaßt, die auch das Membran-artige Gebiet des Drucksensors bildet. Zusätzlich fordert die Erfindung, daß das Verhältnis der Breite des Kanales zu der Dicke der Schichtstruktur oberhalb des Kanales kleiner sein soll als das Verhältnis der kleinsten Erstreckung des Membran-artigen Gebietes in der Membranebene zu der Dicke des Membran-artigen Gebietes. Hierdurch wird trotz des oberflächennahen Verlaufes des Kanales gewährleistet, daß eine nennenswerte Deformation der Gesamtstruktur nur im Bereich des Membran-artigen Gebietes stattfindet, während die Struktur des Drucksensors im Bereich des Kanales von Differenzdruckänderungen im wesentlichen unbeeinflußt bleibt. Die Erfindung lehrt eine örtliche Trennung der eigentlichen Drucksensorfunktion, zu der die Erfassung des Differenzdruckes durch Auslenkung des Membran-artigen Gebietes und die elektrische Erfassung der Auslenkung des Membran-artigen Gebietes sowie die mechanischen Funktionen der Überlastfestigkeit und der spannungsfreien Membranhalterung zu zählen sind, von der Funktion der Zuführung von einem der beiden Drücke zu dem Drucksensorhohlraum, welche durch die erfindungsgemäß ausgestaltete Kanalstruktur erzielt wird. Die durch die Erfindung geschaffene funktionale Trennung steht im Gegensatz zum Stand der Technik, da Relativdrucksensoren nach dem Stand der Technik durch die rückseitige Öffnung des Substrates unterhalb des Membran-artigen Gebietes Spannungen in den Membran-Bereich einführen, im Falle einer kapazitiven Erfassung der Membranauslenkung eine Abhängigkeit der Erfassungskapazität von der kaum definierbaren Abmessung des vorderseitigen Austrittes der rückseitigen Öffnung haben und da bei dieser Drucksensorstruktur zum Stand der Technik die Überlastfestigkeit des Drucksensors eingeschränkt ist.

Die erfindungsgemäße Drucksensorstruktur ermöglicht trotz ihrer Fähigkeit der Differenzdruckmessung die Erzielung sämtlicher Vorteile des eingangs geschilderten Absolutdrucksensors einschließlich seiner erhöhten Meßgenauigkeit und seiner Kompatibilität für CMOS-Schaltungen.

Bevorzugte Weiterbildungen des erfindungsgemäßen Drucksensors sind in den Unteransprüchen definiert.

Bevorzugte Ausführungsformen des erfindungsgemäßen Drucksensors werden nachfolgend unter Bezugnahme auf die beiliegenden Zeichnungen näher erläutert. Es zeigen:
- Fig. 1: Querschnittsdarstellungen zur Verdeutlichung einzelner Herstellungsschritte bei der Drucksensorherstellung;
- Fig. 2: Querschnittsdarstellungen eines Drucksensors und eines zugeordneten Referenzelementes;
- Fig. 3a: eine erste Ausführungsform des erfindungsgemäßen Drucksensors in Querschnittsdarstellung;
- Fig. 3b: eine zweite Ausführungsform des erfindungsgemäßen Drucksensors in Querschnittsdarstellung;
- Fig. 4: eine Draufsicht auf ein Feld erfindungsgemäßer Drucksensoren nach einer dritten Ausführungsform;
- Fig. 5: eine Querschnittsdarstellung einer ersten Ausführungsform einer Drucksensoreinheit mit Gehäuse und der in Fig. 3a gezeigten ersten Ausführungsform des Drucksensors;
- Fig. 6: eine Querschnittsdarstellung einer zweiten Ausführungsform einer Drucksensoreinheit mit Gehäuse und der in Fig. 3b gezeigten zweiten Ausführungsform eines Drucksensors;
- Fig. 7: eine Draufsichtdarstellung einer Drucksensoranordnung mit unterschiedlichen Membrangrößen für verschiedene Druckbereiche; und
- Fig. 8: eine Draufsichtdarstellung einer Druckmeßanordnung zur Erfassung einer Druckverteilung mit hoher räumlicher Auflösung.

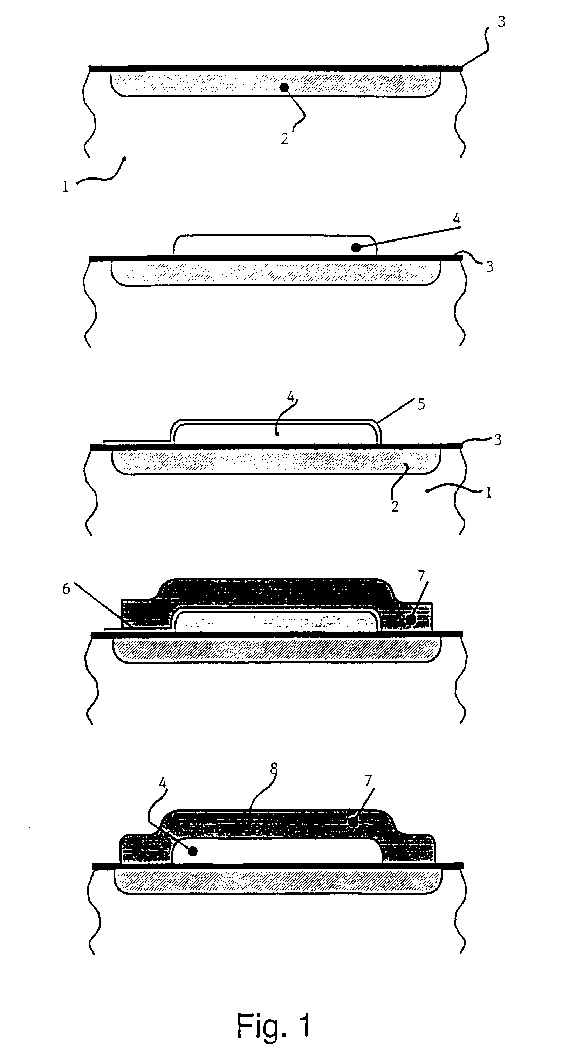

Wie in Fig. 1 gezeigt ist, wird bei der Herstellung eines Drucksensors nach der vorliegenden Erfindung zunächst ein Substrat 1, das bei dem bevorzugten Ausführungsbeispiel ein p-Siliziumsubstrat ist, innerhalb eines Dotierungsbereiches 2 mittels an sich üblicher photolithographischer Maßnahmen mit einer Dotierung versehen, die entgegengesetzt zum Leitfähigkeitstyp des Substrates ist. Bei dem gezeigten p-Substrat 1 wird demgemäß ein n⁺-Dotierungsbereich 2 erzeugt, um einerseits eine gut leitfähige Elektrode zu bilden und um andererseits diese Elektrode, die durch den Dotierungsbereich 2 festgelegt ist, gegenüber dem Substrat 1 durch einen pn-Übergang zu isolieren. Nunmehr wird eine Isolatorschicht 3 aufgebracht.

Auf diese wird eine Abstandshalterschicht 4, die auch als Opferschicht bezeichnet wird, beispielsweise durch Abscheidung von Siliziumdioxid aufgebracht. Diese Abstandshalterschicht 4 wird mittels an sich bekannter photolithographischer Maßnahmen zur Festlegung des späteren Drucksensorhohlraumes strukturiert, wobei dieser mittig oberhalb des Dotierungsbereiches 2 angeordnet wird. Anschließend wird eine weitere Oxidschicht 5 abgeschieden und photolithographisch zur Festlegung von späteren Ätzkanälen 6 strukturiert. Nunmehr erfolgt die Abscheidung einer Polysiliziumschicht 7, welche zumindest im Bereich eines späteren Membran-artigen Gebietes 8 oberhalb eines Drucksensorhohlraumes 9 leitfähig dotiert ist. Durch Ätzen mittels Flußsäure wird durch den Ätzkanal 6 die aus Oxid bestehende Abstandshalterschicht 4, 5 entfernt, woraufhin die Ätzkanäle 6 durch Abscheidung eines geeigneten Materiales, wie beispielsweise einer Oxidschicht, verschlossen werden.

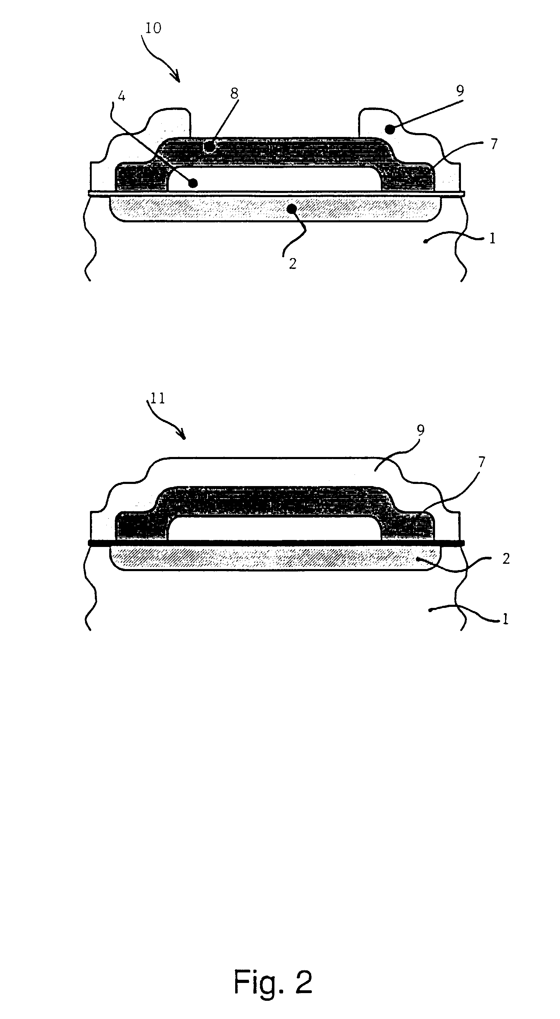

Wie in Fig. 2 gezeigt ist, kann zur Bildung eines Drucksensors, der dort in seiner Gesamtheit mit dem Bezugszeichen 10 bezeichnet ist, eine abschließende Oxidschicht 9 im Bereich des Membran-artigen Gebietes 8 durch Ätzen entfernt werden, während diese Oxidschicht 9 zur Festlegung eines von der Grundkapazität her entsprechenden Referenzelementes, welches in seiner Gesamtheit mit dem Bezugszeichen 11 bezeichnet ist, unverändert verbleibt.

Eine Querschnittsdarstellung einer ersten Ausführungsform eines erfindungsgemäßen Drucksensors, der in seiner Gesamtheit mit dem Bezugszeichen 20 bezeichnet ist, wird nachfolgend unter Bezugnahme auf Fig. 3a erläutert. Dieser umfaßt ein Substrat 21 mit einem Dotierungsbereich 22, wobei die Dotierung wiederum entgegengesetzt zum Leitfähigkeitstyp des Substrates 21 gewählt ist. Oberhalb einer Isolatorschicht 23 ist eine einen Drucksensorhohlraum 24 festlegende erste Polysiliziumschicht 25 vorgesehen, welche oberhalb des Dotierungsbereiches 22 ein Membran-artiges, dünnes Gebiet 26 festlegt. Dieses Membran-artige Gebiet 26 ist von einem ersten Druck, der auch als Außendruck bezeichnet werden kann, beaufschlagbar.

Ausgehend von dem Drucksensorhohlraum 24 erstreckt sich ein an den Hohlraum 24 anschließender Kanal 27 entlang der Oberfläche 28 des Substrates 21, welcher bei der hier gezeigten Ausführungsform in einer Seitenöffnung 29 mündet.

Der Kanal wird gegenüber dem Substrat 21 von einer Schichtstruktur festgelegt, welche einerseits die erste Polysiliziumschicht 25 umfaßt, die das Membran-artige Gebiet 26 des Drucksensors 20 umfaßt, und andererseits eine hierauf abgeschiedene Verstärkungsschicht 30 aufweist. Die Verstärkungsschicht 30 oberhalb der ersten Polysiliziumschicht 25 kann ebenfalls aus Polysilizium bestehen. Gleichfalls ist es denkbar, diese Verstärkungsschicht auch aus Siliziumdioxid oder Siliziumnitrid zu bilden.

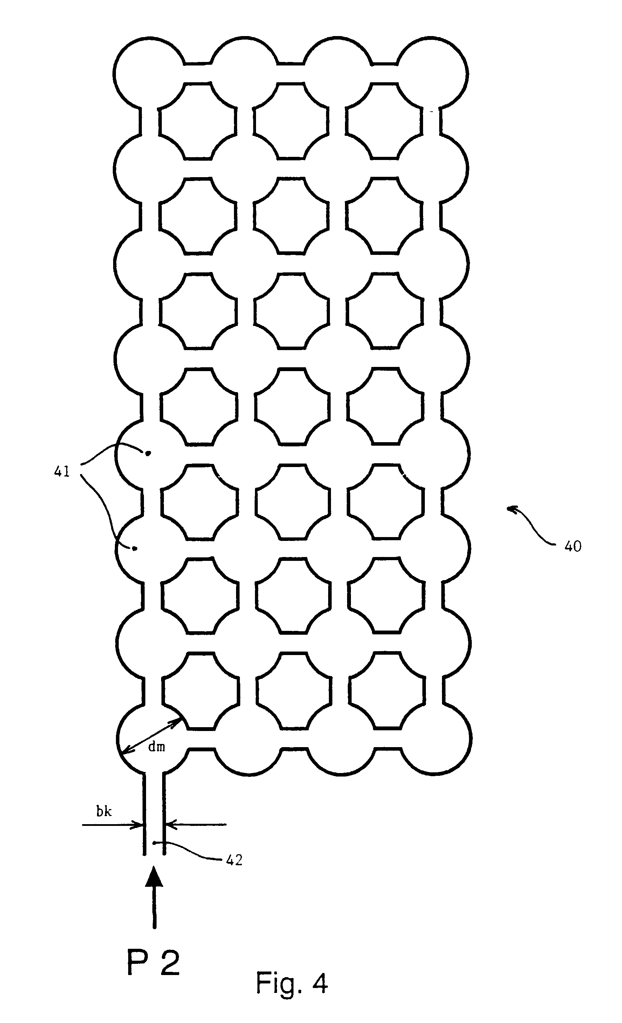

Wie insbesondere bei der Draufsichtdarstellung der Fig. 4 auf ein Drucksensorfeld 40 mit einer Mehrzahl von miteinander verbundenen Drucksensoren 41 verdeutlicht ist, ist vorzugsweise die Breite bk des Kanales 42 kleiner als der Durchmesser bzw. die kleinste Lateralerstreckung dm des Membran-artigen Gebietes eines jeden Drucksensors 41. Allgemein muß das Verhältnis der Breite bk des Kanales 27, 42 zu der Dicke ds der Schichtstruktur 25, 30 oberhalb des Kanales kleiner sein als das Verhältnis der kleinsten Erstreckung dm des Membran-artigen Gebietes 26, 41 in der Membranebene zu der Dicke dg des Membran-artigen Gebietes 26. Hierdurch wird sichergestellt, daß der Differenzdruck zwischen dem ersten Druck P1, der von außen auf die Membran 26 einwirkt, und dem über den Kanal 27 in den Drucksensorhohlraum 24 geführten zweiten Druck P2 lediglich das Membran-artige Gebiet 26 verformt, nicht jedoch eine nennenswerte Verformung der Schichtenstruktur 25, 30 im Bereich des Kanales hervorruft.

Bei der genannten Dimensionierung kann bei ausreichend schmalen Kanälen 27 auf die zusätzliche Verstärkungsschicht 30 verzichtet werden, obgleich diese als vorteilhaft angesehen wird.

Die zweite Ausführungsform eines Drucksensors, die in Fig. 3b in ihrer Gesamtheit mit dem Bezugszeichen 32 bezeichnet ist, stimmt mit Ausnahme der nachfolgend beschriebenen Abweichungen mit der unter Bezugnahme auf Fig. 3a beschriebenen ersten Ausführungsform des Drucksensors 20 überein, wobei gleiche Bezugszeichen gleiche oder ähnliche Teile bezeichnen. In Abweichung zu der ersten Ausführungsform des Drucksensors 20 wird hier auf die Seitenöffnung 29 des Kanales 27 verzichtet, wobei der Kanal 27 auf der dem Drucksensorhohlraum 24 abgewandten Seite durch die erste Polysiliziumschicht 25 sowie die Verstärkungsschicht 30 gegenüber dem Substrat 21 verschlossen ist. Das Substrat 21 weist unterhalb des Kanales 27 eine beispielsweise durch anisotropes Ätzen erzeugte Rückseitenöffnung 33 auf. Die Rückseitenöffnung erstreckt sich von der Substratrückseite 34 durch das Substrat 21 hindurch derart bis zu der Vorderseite bzw. Oberfläche 28 des Substrates 21, daß der vorderseitige Austritt 35 der Rückseitenöffnung 33 außerhalb des Membran-artigen Gebietes 26 und lediglich im Bereich des Kanales 27 zu liegen kommt.

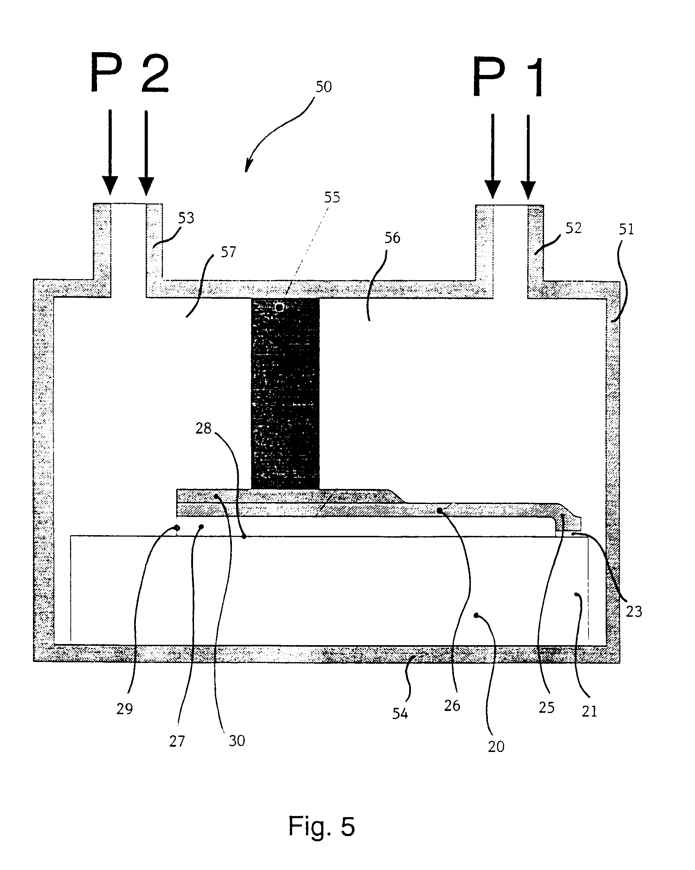

Fig. 5 zeigt eine Schnittdarstellung durch eine erste Ausführungsform einer Drucksensoreinheit, die in ihrer Gesamtheit mit dem Bezugszeichen 50 bezeichnet ist und ein Gehäuse 51 sowie die unter Bezugnahme auf Fig. 3a beschriebene erste Ausführungsform des Drucksensors 20 umfaßt. Das Gehäuse 51 hat zwei voneinander beabstandete Anschlußrohre 52, 53, durch die der erste bzw. zweite Druck P1, P2 anlegbar sind. Der Drucksensor 20 ist mit der Rückseite des Siliziumsubstrates 21 gegenüber dem Boden 54 des Gehäuses 51 beispielsweise durch eine Klebung festgelegt. Das Gehäuse ist durch eine Trennwand 55 in zwei Gehäusebereiche 56, 57 für den ersten bzw. zweiten Druck P1, P2 unterteilt. Die Trennwand verläuft im wesentlichen vertikal zu der Längsrichtung des Kanales 27 und dichtet mit dem Drucksensor 20 im Bereich seiner Verstärkungsschicht 30 ab.

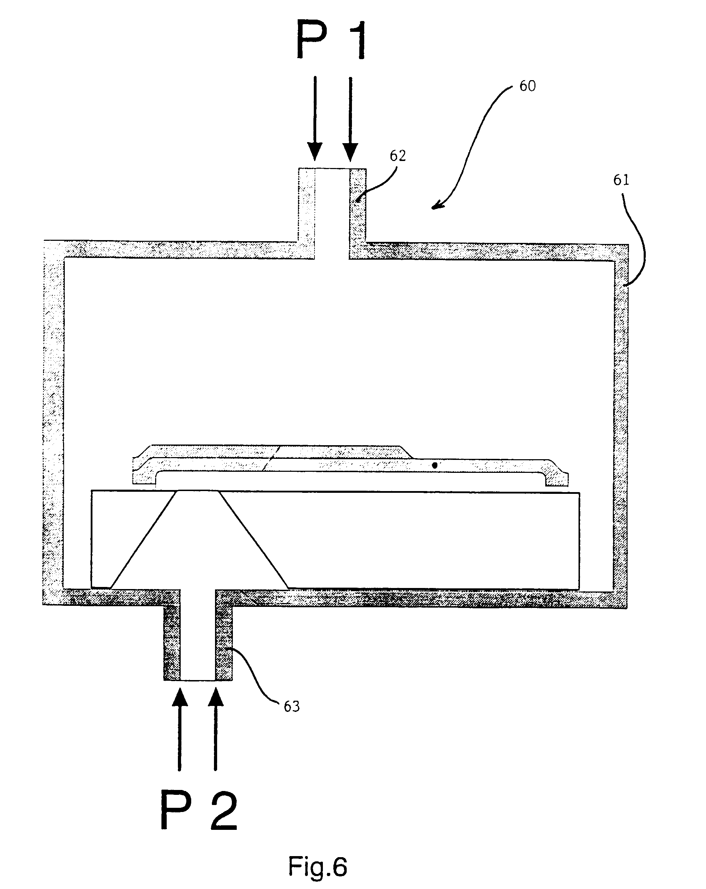

Fig. 6 zeigt eine zweite Ausführungsform einer Drucksensoreinheit, die in ihrer Gesamtheit mit dem Bezugszeichen 60 bezeichnet ist. Auch diese weist ein Gehäuse 61 auf, welches zwei Anschlußrohre 62, 63 zur Beaufschlagung mit dem ersten und zweiten Druck P1, P2 hat. Jedoch sind hier die Anschlußrohre 62, 63 vorzugsweise an gegenüberliegenden Wänden des Gehäuses 61 vorgesehen. Die zweite Ausführungsform des Drucksensors 32, wie sie unter Bezugnahme auf Fig. 3b beschrieben wurde, ist mit ihrer Rückseitenöffnung 33 oberhalb des Anschlußrohres 63 gegenüber der Wandung durch eine Klebung festgelegt, von der dieses Anschlußrohr 63 ausgeht.

Wie unter Bezugnahme auf Fig. 4 bereits erläutert wurde, kann eine auf einem Wafer ausgebildete Drucksensoreinheit ein Drucksensorfeld 40 sein, welches eine Vielzahl von Drucksensoren 41 umfaßt. Bei kapazitiver Auswertung wird man die einzelnen Elektroden parallel schalten, um durch diese feldartige Anordnung eine erhöhte Empfindlichkeit zu erreichen. Bei einem derartigen Drucksensorfeld werden die einzelnen Drucksensoren durch Kanäle miteinander verbunden, deren Gestalt dem im einzelnen beschriebenen Kanal 27 weitgehend ähnelt.

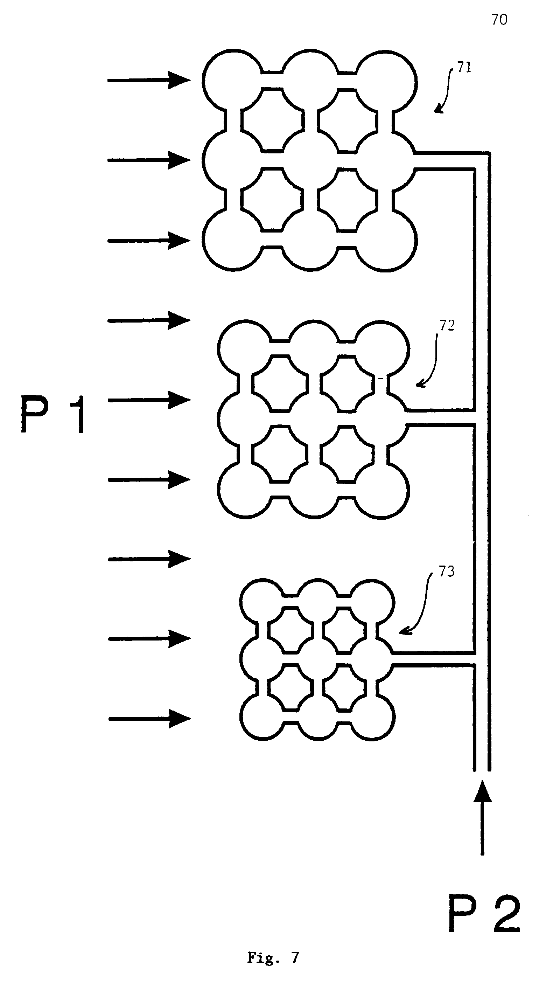

Falls eine Erfassung unterschiedlicher Druckbereiche mit einem einzigen Drucksensorfeld erwünscht ist, wird man sich der in Fig. 7 in Draufsichtdarstellung gezeigten Ausführungsform bedienen, die in ihrer Gesamtheit mit dem Bezugszeichen 70 bezeichnet ist. Diese Drucksensoranordnung 70 umfaßt drei Drucksensorfelder 71, 72, 73, wobei die Flächen der Membran-artigen Gebiete des Drucksensorfeldes 71 größer sind als diejenigen des Drucksensorfeldes 72, welche wiederum größer sind als diejenigen des Drucksensorfeldes 73. Damit dient das letztgenannte Drucksensorfeld 73 der Erfassung eines hohen Druckbereiches, das zweitgenannte Drucksensorfeld 72 der Erfassung eines mittleren Druckbereiches, während das erstgenannte Drucksensorfeld 71 für einen niederen Druckbereich vorgesehen ist.

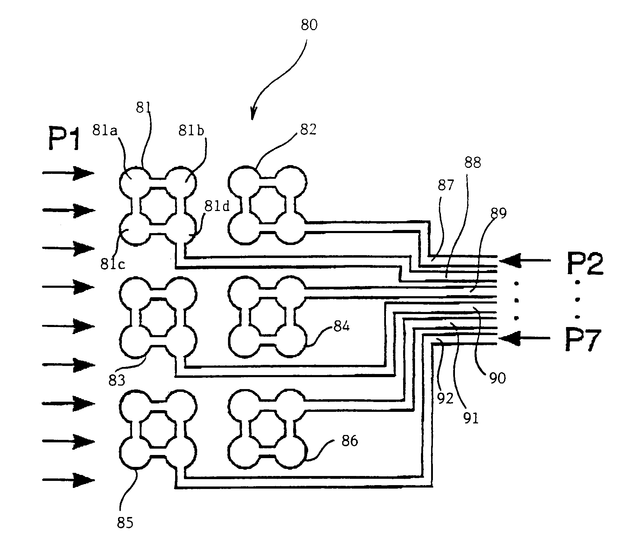

Fig. 8 zeigt eine weitere Drucksensoranordnung in Draufsichtdarstellung, die in Ihrer Gesamtheit mit dem Bezugszeichen 80 bezeichnet ist. Diese Drucksensoranordnung umfaßt sechs Drucksensorfelder 81, 82, 83, 84, 85, 86, welche auf einem einzigen Chip angeordnet sind und jeweils eine Mehrzahl von vorzugsweise vier miteinander über Kanäle verbundenen Drucksensoren 81a, 81b, 81c, 81d umfassen. Jedes der Drucksensorfelder 81, 82, 83, 84, 85, 86 steht mit einem Kanal 87, 88, 89, 90, 91, 92 in Verbindung. Die Kanäle sind an einem Druckerfassungsbereich 93 auf dem Chip auf einen engen Raum zusammengeführt, um hier die Messung einer Druckverteilung P2, ..., P7 mit vergleichsweise hoher räumlicher Auflösung zu ermöglichen.

## Patentansprüche

1. Drucksensor mit
einem Substrat (21) und
einer auf dem Substrat (21) abgeschiedenen und einen Hohlraum (24) festlegenden ersten Schicht (25), die oberhalb des Hohlraumes (24) ein Membran-artiges Gebiet (26) aufweist, das von einem außerhalb des Hohlraumes (24) herrschenden Druck (P1) beaufschlagbar ist,
einem Kanal (27), der sich an den Hohlraum (24) anschließt und der sich entlang der Oberfläche (28) des Substrates (21) unter der abgeschiedenen ersten Schicht (25) erstreckt und mit einem zweiten Druck (P2) beaufschlagbar ist,
wobei der Kanal (27) von einer die erste Schicht (25) und eine auf der ersten Schicht (25) abgeschiedenen und diese überdeckenden und verstärkenden zweiten Schicht (30) umfassenden Schichtstruktur (25, 30) einerseits und dem Substrat (21) andererseits festgelegt ist,
die zweite Schicht (30) nicht das Membran-artige Gebiet (26) überdeckt, und
das Verhältnis der Breite (bk) des Kanales (27) zu der Dicke (ds) der Schichtstruktur (25, 30) oberhalb des Kanales (27) kleiner ist als das Verhältnis der kleinsten Erstreckung (dm) des Membran-artigen Gebietes (26) in der Membranebene zu der Dicke (dg) des Membran-artigen Gebietes (26).

2. Drucksensor nach Anspruch 1, bei dem
die erste Schicht (25) aus Polysilizium besteht, und
die zweite Schicht (30) aus Polysilizium besteht.

3. Drucksensor nach Anspruch 1, bei dem
die erste Schicht (25) aus Polysilizium besteht, und
die zweite Schicht (30) aus Siliziumdioxid besteht.

4. Drucksensor nach Anspruch 1, bei dem
die erste Schicht (25) aus Polysilizium besteht, und
die zweite Schicht (30) aus Siliziumnitrid besteht.

5. Drucksensor nach einem der Ansprüche 1 bis 4, bei dem
das Substrat eine Rückseitenöffnung (33) aufweist, die sich von der Substratrückseite durch das Substrat hindurch bis zu dem Kanal (27) erstreckt.

6. Drucksensoranordnung, mit
einer Mehrzahl von auf einem Chip ausgebildeten Drucksensoren nach einem der Ansprüche 1 bis 5.

7. Drucksensorancrdnung nach Anspruch 6, bei der
jeder der Drucksensoren (81, ..., 86) einen Kanal (87, ..., 92) aufweist, welcher jeweils an den Hohlraum des Drucksensors (81, ..., 86) anschließt, und
die Kanäle (87, ..., 92) an einem Druckerfassungsbereich (93) auf dem Chip zur Erfassung einer Druckverteilung mit hoher räumlicher Auflösung zusammengeführt sind.

## Claims

1. A pressure sensor comprising
a substrate (21) and
a first layer (25) deposited on said substrate (21) and defining a cavity (24), said layer (25) including above said cavity (24) a diaphragmlike area (26) which is adapted to be acted upon by a pressure (P1) prevailing outside of said cavity (24),
a channel (27) which borders on said cavity (24) and which extends along the surface (28) of said substrate (21) below said deposited first layer (25), said channel (27) being adapted to be acted upon by a second pressure (P2),
wherein said channel (27) is defined, on the one hand, by a layered structure (25, 30) comprising said first layer (25) and a second layer (30) deposited on said first layer (25) and covering as well as reinforcing it, and, on the other hand, by said substrate (21),
said second layer (30) does not cover the diaphragmlike area (26), and
the ratio of the width (bk) of the channel (27) to the thickness (ds) of the layered structure (25, 30) above the channel (27) is smaller than the ratio of the smallest extension (dm) of the diaphragmlike area (26) in the diaphragm plane to the thickness (dg) of the diaphragmlike area (26).

2. A pressure sensor according to claim 1, characterized in
that the first layer (25) consists of polysilicon, and
that the second layer (30) consists of polysilicon.

3. A pressure sensor according to claim 1, characterized in
that the first layer (25) consists of polysilicon, and
that the second layer (30) consists of silicon dioxide.

4. A pressure sensor according to claim 1, characterized in
that the first layer (25) consists of polysilicon, and
that the second layer (30) consists of silicon nitride.

5. A pressure sensor according to one of the claims 1 to 4, characterized in
that the substrate is provided with a rear opening (33) extending from the rear of the substrate through said substrate up to the channel (27).

6. An arrrangement of pressure sensors, characterized by
a plurality of pressure sensors according to one of the claims 1 to 5, said pressure sensors being formed on a chip.

7. An arrrangement of pressure sensors according to claim 6, characterized in
that each of said pressure sensors (81, ..., 86) is provided with a channel (87, ..., 92) bordering on the cavity of the respective pressure sensor (81, ..., 86), and
that the channels (87, ..., 92) are concentrated into a pressure detection area (93) on said chip so as to detect a pressure distribution with high spatial resolution.

## Revendications

1. Capteur de pression, avec
un substrat (21), et
une première couche (25), déposée sur le substrat (21) et définissant un espace creux (24), présentant, au-dessus de l'espace creux (24), une zone en forme de membrane (26) qui peut être soumise à l'admission d'une pression (P1) régnant à l'extérieur de l'espace creux (24),
un canal (27) qui aboute à l'espace creux (24) et s'étend le long de la surface (28) du substrat (21), sous la première couche (25) déposée, et qui peut être soumis à l'admission d'une seconde pression (P2),
dans lequel le canal (27) est défini, d'une part, par une structure de couches (25, 30) comportant la première couche (25) et une seconde couche (30), déposée sur la première couche (25) et recouvrant et renforçant celle-ci, et, d'autre part, par le substrat (21),
la seconde couche (30) ne recouvre pas la zone en forme de membrane (26), et
le rapport entre la largeur (bk) du canal (27) et l'épaisseur (ds) de la structure de couches (25, 30) au-dessus du canal (27) est inférieur au rapport entre l'extension la plus petite (dm) de la zone en forme de membrane (26) dans le plan de la membrane et l'épaisseur (dg) de la zone en forme de membrane (26).

2. Capteur de pression suivant la revendication 1, dans lequel la première couche (25) est en polysilicium et la seconde couche (30) est en polysilicium.

3. Capteur de pression suivant la revendication 1, dans lequel la première couche (25) est en polysilicium et la seconde couche (30) est en dioxyde de silicium.

4. Capteur de pression suivant la revendication 1, dans lequel la première couche (25) est en polysilicium et la seconde couche (30) est en nitrure de silicium.

5. Capteur de pression suivant l'une des revendications 1 à 4, dans lequel le substrat présente une ouverture du côté arrière (33) qui s'étend du côté arrière du substrat, à travers le substrat, jusqu'au canal (27).

6. Agencement de capteurs de pression, avec une pluralité de capteurs de pression suivant l'une des revendications 1 à 5 réalisés sur une puce.

7. Agencement de capteurs de pression suivant la revendication 6, dans lequel
chacun des capteurs de presion (81,..., 86) présente un canal (87,..., 92) qui aboute chaque fois à l'espace creux du capteur de pression (81,..., 86), et
les canaux (87, ..., 92) sont réunis en une zone de détection de pression (93) sur la puce, pour capter une distribution de pressions avec une haute résolution spatiale.
